# EUROPÄISCHE PATENTSCHRIFT

(11) **EP 2 976 557 B1**
(45) Veröffentlichungstag und Bekanntmachung des Hinweises auf die Patenterteilung: **16.11.2016**
(21) Anmeldenummer: 14723981.8
(22) Anmeldetag: 17.03.2014
(51) Int. Cl.: F16J 15/447

(54) **DICHTELEMENT**
SEALING ELEMENT
JOINT D'ÉTANCHÉITÉ

(30) Priorität: 17.03.2013 DE 202013101140 U
(43) Veröffentlichungstag der Anmeldung: 27.01.2016
(73) Patentinhaber: Paul Müller GmbH & Co. KG Unternehmensbeteiligungen, 90411 Nürnberg (DE)
(72) Erfinder: ELBACHER, Manfred, 90411 Nürnberg (DE); RADKE, Andreas, 90411 Nürnberg (DE)
(74) Vertreter: Lösch, Christoph Ludwig Klaus
(86) Internationale Anmeldenummer: PCT/DE2014/100090
(87) Internationale Veröffentlichungsnummer: WO 2014/146643

(56) Entgegenhaltungen:
- EP-A1- 0 232 963
- WO-A1-2005/059412
- DE-A1- 3 833 690
- DE-B- 1 109 470
- GB-A- 274 049
- US-A- 4 458 957
- US-A- 5 174 583

## Beschreibung

Die Erfindung betrifft ein Dichtelement zur Abdichtung einer zylindrischen Innenfläche eines ersten Maschinenbauteils und einer zylindrischen Außenfläche eines zweiten Maschinenbauteils.

Als sogenannte Spalt- oder Labyrinthdichtungen ausgebildete Dichtelemente sind vorbekannt. In diesen Spalt- oder Labyrinthdichtungen erfolgt eine berührungslose Abdichtung durch das Vorsehen eines im Allgemeinen mäanderförmig ausgebildeten Dichtspaltes. Es besteht jedoch die Möglichkeit, dass in diesen Dichtspalt Umgebungsmedien (insbesondere Flüssigkeiten) eindringen. Spalt- oder Labyrinthdichtungen sind folglich nicht absolut dicht, sondern ermöglichen zu einem gewissen Grad das Passieren von Umgebungsmedien.

Eine ähnliche Dichtung ist aus US 4'458'957 A1 bekannt.

Der Erfindung liegt die Aufgabe zugrunde, ein Dichtelement mit verbesserten Dichteigenschaften anzubieten.

Diese Aufgabe wird durch ein Dichtelement mit den Merkmalen des Anspruchs 1 gelöst. Vorteilhafte Ausführungsformen sind in den Unteransprüchen beschrieben.

Das erfindungsgemäße Dichtelement dient zur Abdichtung einer zylindrischen Innenfläche eines ersten Maschinenbauteils und einer zylindrischen Außenfläche eines zweiten Maschinenbauteils. Das erfindungsgemäße Dichtelement besitzt einen Innenring, einen koaxial zum Innenring angeordneten Außenring und einen Dichtspalt, welcher durch eine außenliegende Mantelfläche des Innenrings und eine innenliegende Mantelfläche des Außenrings gebildet wird. Der Dichtspalt weist in einem Axialschnitt durch die gemeinsame Achse des Innenrings- und des Außenrings ein Profil mit mindestens folgenden Profilabschnitten auf: einen Eingangsabschnitt, einen Ausgangsabschnitt und einen Mäanderabschnitt. Der Eingangsabschnitt stellt einen ersten Endabschnitt des Dichtspalts mit einem ersten Radius zur gemeinsamen Achse dar. Der Ausgangsabschnitt stellt einen zweiten Endabschnitt des Dichtspalts mit einem zweiten Radius zur gemeinsamen Achse dar. Der zweite Radius ist kleiner als der erste Radius. Der Mäanderabschnitt schließt sich an den Eingangsabschnitt an und besitzt einen sich monoton verkleinernden Radius.

Monoton verkleinernd ist hierbei im mathematischen Sinne zu verstehen, d.h. beginnend bei Eingangsabschnitt verringert sich der Abstand des Profils des Dichtspalts zur gemeinsamen Achse bzw. bleibt dieser Abstand gleich.

Auf diese Weise werden von der Eingangsseite in den Dichtspalt eindringende Flüssigkeiten bei einer Rotation der abzudichtenden Maschinenelemente aufgrund von Zentrifugalkräften zum Eingangsabschnitt zurücktransportiert. D.h. es findet eine sog. Rückförderung statt. Dies wiederum verbessert die Dichteigenschaften des Dichtelements.

Unter dem Mäanderabschnitt wird ein Abschnitt des Dichtspalts verstanden, in dem der Dichtspalt ein mäanderförmiges Profil aufweist. Hierbei wird unter mäanderförmig sowohl eine zick-zack-artige Ausbildung des Profils, insbesondere in Form von rechteck- und/oder dreieckförmigen Windungen als auch eine schlingenartige Ausbildung des Profils verstanden.

Aufgrund der oben beschriebenen Ausbildung des Dichtspaltes besitzt das Dichtelement ein hohes Axialspiel. Außerdem ist eine sogenannte zerfallende Montage (separate Montage von Innenring und Außenring) möglich. Somit wird die Montagefreundlichkeit erhöht.

In einer vorteilhaften Ausführungsform weist das Dichtelement ferner einen Dichtring auf, welcher im Dichtspalt angeordnet ist. Durch diesen Dichtring wird der Durchfluss von Umgebungsflüssigkeiten behindert. Insbesondere verbessert der Dichtring die Dichteigenschaften auch im ruhenden Zustand der abzudichtenden Maschinenbauteile, d.h. wenn keine Rotationsbewegung zwischen den abzudichtenden Maschinenbauteilen erfolgt und damit die im vorhergehenden Absatz beschriebene Rückförderung nicht stattfindet. Folglich besitzt diese Ausführungsform der Erfindung sowohl im ruhenden Zustand als auch im rotierenden Zustand der abzudichtenden Maschinenelemente verbesserte Dichteigenschaften.

In vorteilhafter Weise ist der Dichtring hierbei derart im Dichtspalt positioniert, dass der Dichtring entweder nur den Innenring oder nur den Außenring kontaktiert. Auf diese Weise stellt das Dichtelement auch in der Ausführungsform mit dem Dichtring ein berührungsloses Dichtelement dar.

In besonders vorteilhafter Weise ist der Dichtring im Dichtspalt zwischen dem Mäanderabschnitt und dem Ausgangsabschnitt angeordnet. Auf diese Weise wird die Rückförderung des Mäanderabschnitts in Richtung des Eingangsabschnitts durch das Vorhandensein des Dichtrings nicht behindert.

Der Dichtring kann in einer Nut der außenliegenden Mantelfläche des Innenrings und/oder in einer Nut der innenliegende Mantelfläche des Außenrings positioniert sein. Dies ermöglicht eine besonders lagestabile und exakte Positionierung des Dichtrings. Außerdem wird ein unbeabsichtigtes Verrutschen des Dichtrings während des Betriebs des Dichtelements wirkungsvoll verhindert.

In einer weiteren vorteilhaften Ausführungsform weist das Profil des Dichtspalts zwischen dem Mäanderabschnitt und dem Dichtring eine Verengung (Verringerung der Dichtspalthöhe) auf. Diese Verengung erzeugt einen weiteren Widerstand für Umgebungsmedien, die in den Dichtspalt eingedrungen sind. In Kombination mit dem anschließend daran angeordneten Dichtring wird die Durchlässigkeit des Dichtelements für Umgebungsmedien weiter verringert, sodass die Dichteigenschaften weiter verbessert werden.

In einer weiteren vorteilhaften Ausführungsform weist das Profil des Dichtspalts zwischen dem Dichtring und dem Ausgangsabschnitt eine Verbreiterung (Aufweitung des Dichtspalts, Vergrößerung der Dichtspalthöhe) auf. Durch die sich an den Dichtring in Richtung des Ausgangsabschnitts anschließende Verbreiterung kann ansonsten eventuell auftretenden Kapillarkräften entgegengewirkt werden. Durch die Verbreiterung ist es Umgebungsflüssigkeiten, die von Richtung des Eingangsabschnitts in den Dichtspalt eingedrungen sind, nicht möglich gleichsam (aufgrund von Kapillarkräften) am Dichtring vorbei gesaugt zu werden.

In einer vorteilhaften Ausführungsform wird der Mäanderabschnitt mindestens aus einem ersten Paar von parallel zueinander verlaufenden, konischen Teilflächen des Innenrings und des Außenrings sowie einem zweiten Paar von parallel zueinander verlaufenden, konischen Teilflächen des Innenrings und des Außenrings gebildet. Das erste und das zweite Paar sind hierbei entgegengesetzt zueinander konisch ausgebildet. Ein derartiger Mäanderabschnitt ermöglicht zum einen eine große Dichtspaltlänge - was zu einer verbesserten Dichtheit führt - und zum anderen eine ungehinderte Rückförderung eingedrungener Umgebungsmedien hin zum Eingangsabschnitt.

In besonders vorteilhafter Weise besitzen der Konuswinkel des ersten Paares und der Konuswinkel des zweiten Paares einen betragsmäßig ähnlichen (d.h. Betrag variiert um höchstens 10%) oder betragsmäßig gleichen Wert. Auf diese Weise wird eine besonders gleichmäßige Rückförderung der eingedrungenen Umgebungsmedien erreicht.

Durch das Vorsehen einer Abflussnut im Außenring kann die Rückförderung bzw. der Abfluss von eingedrungenen Umgebungsmedien weiter verbessert werden.

Das Dichtelement kann sowohl aus metallischen Werkstoffen, insbesondere einem Stahl- oder Aluminiumwerkstoff, als auch aus einem polymeren Werkstoff, insbesondere Polyoxymethylen, hergestellt sein. Auch ist es möglich, dass der Innenring und der Außenring aus unterschiedlichen Werkstoffen bestehen.

Die Erfindung ist anhand von Ausführungsbeispielen in den Zeichnungsfiguren weiter erläutert. Es zeigen:
- Fig. 1: eine Seitenansicht eines Dichtelements;
- Fig. 2: einen Axialschnitt des Dichtelements durch die gemeinsame Achse entlang der Schnittebene A - A aus Fig. 1; und
- Fig. 3: einen vergrößerten Ausschnitt des Bereichs Z aus Fig. 2 mit zusätzlich dargestellten Flächen abzudichtender Maschinenbauteile.

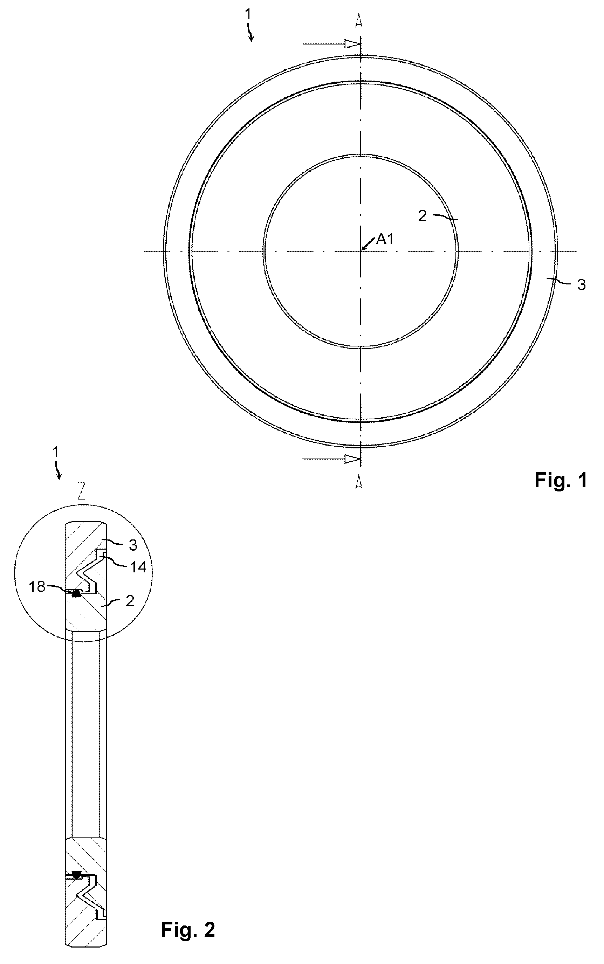

Das in den Figuren 1 bis 3 dargestellte Dichtelement 1 weist einen Innenring 2 und einen koaxial zu diesem angeordneten Außenring 3 auf. Der Innenring 2 und der Außenring 3 sind koaxial zu der gemeinsamen Achse A1 angeordnet.

Der Innenring 2 besitzt eine im Wesentlichen axial verlaufende innenliegende Mantelfläche 4, eine erste Seitenfläche (Stirnfläche) 5, eine zweite Seitenfläche (Stirnfläche) 6 sowie eine außenliegende Mantelfläche 7. Die innenliegende Mantelfläche 4 ist mit einer zylindrischen Außenfläche 8 eines Maschinenbauteils verbunden. Die erste Seitenfläche 5 und die zweite Seitenfläche 6 verlaufen im Wesentlichen radial. Die erste Seitenfläche 5 besitzt eine geringere Breite als die zweite Seitenfläche 6.

Der Außenring 3 besitzt eine im Wesentlichen axial verlaufende außenliegende Mantelfläche 9, eine erste Seitenfläche (Stirnfläche) 10, eine zweite Seitenfläche (Stirnfläche) 11 sowie eine innenliegende Mantelfläche 12. Die außenliegende Mantelfläche 9 ist mit einer zylindrischen Innenfläche 13 eines weiteren Maschinenbauteils verbunden. Die erste Seitenfläche 10 und die zweite Seitenfläche 11 verlaufen im Wesentlichen radial. Die erste Seitenfläche 10 besitzt eine größere Breite als die zweite Seitenfläche 11.

Die innenliegende Mantelfläche 12 des Außenrings 3 und die außenliegende Mantelfläche 7 des Innenrings 2 bilden zwischen sich einen Dichtspalt 14 aus. Mit anderen Worten kontaktieren sich die innenliegende Mantelfläche 12 des Außenrings 3 und die außenliegende Mantelfläche 7 des Innenrings 2 nicht, sondern es verbleibt ein ringförmiger Spalt, nämlich der Dichtspalt 14.

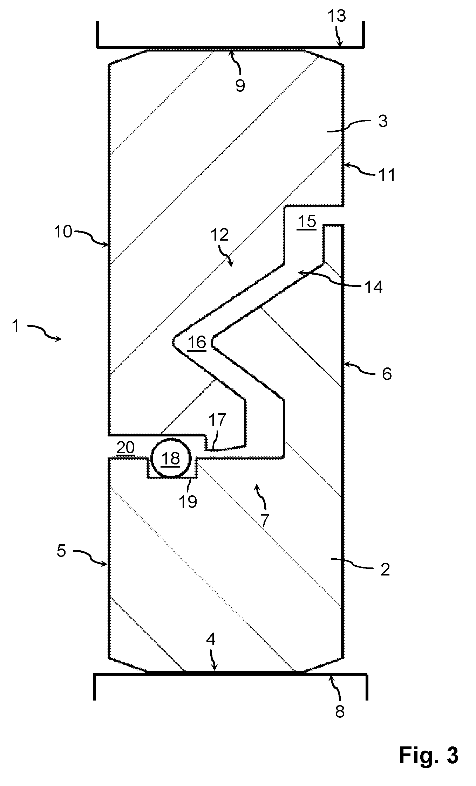

Das in Fig. 2 und Fig. 3 dargestellt Profil des Dichtspaltes 14 - und damit der Dichtspalt 14 selbst - weist im Bereich der zweiten Seitenfläche 6 bzw. 11 einen Endabschnitt auf. Dieser Endabschnitt wird im Folgenden als Eingangsabschnitt 15 bezeichnet. Dieser Eingangsabschnitt 15 weist als Abstand zur gemeinsamen Achse A1 einen Abstand in Höhe eines ersten Radius auf. Der Eingangsabschnitt 15 ist als axial verlaufender Spalt ausgebildet, welcher im unmittelbaren Eingangsbereich eine verkleinerte Höhe aufweist. Diese verkleinerte Höhe im unmittelbaren Eingangsbereich sorgt für eine Abschirmung des Dichtspalts 14 und verbessert die Dichteigenschaften des Dichtelements 1.

An den Eingangsabschnitt 15 schließt sich der Mäanderabschnitt 16 an. Dieser Mäanderabschnitt 16 besitzt einen sich monoton verkleinernden Radius. Mit anderen Worten verringert sich der Abstand des Dichtspaltes 14 im Bereich des Mäanderabschnitts 16 relativ zur gemeinsamen Achse A1 monoton. Umgebungsflüssigkeiten, die von der Seite des Eingangsabschnitts 15 in den Dichtspalt 14 eindringen, werden auf diese Weise bei einer Rotation der abzudichtenden Maschinenteile rückgefördert. Der in den Figuren 2 und 3 dargestellte Mäanderabschnitt 16 besteht im Wesentlichen aus einem ersten Paar von parallel zueinander verlaufenden, konischen Teilflächen der innenliegenden Mantelfläche 12 des Außenrings 3 und der außenliegenden Mantelfläche 7 des Innenrings 2 und einem zweiten Paar von parallel zueinander verlaufenden, konischen Teilflächen der innenliegenden Mantelfläche 12 des Außenrings 3 und der außenliegenden Mantelfläche 7 des Innenrings 2. Das erste und das zweite Paar sind entgegengesetzt zueinander konisch ausgebildet, sodass ein zick-zackartiges Profil des Dichtspaltes 14 in diesem Abschnitt entsteht.

An den Mäanderabschnitt 16 schließt sich eine Verengung 17 des Dichtspaltes 14 an. Die Verengung 17 stellt eine Barriere für eindringende Umgebungsflüssigkeiten dar und verbessert daher die Dichteigenschaften des Dichtelements 1.

An die Verengung 17 schließt sich ein Dichtring 18 an. Der Dichtring 18 ist im Dichtspalt 14 angeordnet. Genauer ist der Dichtring 18 in einer im Innenring 2 ausgebildeten Nut 19 positioniert. Im dargestellten Ausführungsbeispiel ist der Dichtring 18 als O-Ring ausgebildet. Der Dichtring 18 behindert den Durchfluss von in den Dichtspalt 14 eingedrungenen Umgebungsflüssigkeiten. Insbesondere verbessert der Dichtring 18 die Dichteigenschaften auch im ruhenden Zustand der abzudichtenden Maschinenbauteile, d.h. wenn keine Rotationsbewegung zwischen den abzudichtenden Maschinenbauteilen erfolgt. Zwischen dem Dichtring 18 und dem Außenring 3 verbleibt ein Spalt, sodass keine Berührung zwischen dem Dichtring 18 und dem Außenring 3 stattfindet. Dadurch ist das Dichtelement 1 als berührungslose Dichtung ausgebildet.

An den Dichtring 18 schließt sich ein Ausgangsabschnitt 20 an. Der Ausgangsabschnitt 20 ist ein Endabschnitt des Dichtspalts 14 im Bereich der ersten Seitenfläche 5 bzw. 10. Der Ausgangsabschnitt 20 ist als axial verlaufender Abschnitt ausgebildet. Der Ausgangsabschnitt 20 weist als Abstand zur gemeinsamen Achse A1 einen Abstand in Höhe eines zweiten Radius auf. Der zweite Radius ist geringer als der erste Radius. Die Höhe des Dichtspalts 14 im Bereich des Ausgangsabschnitts 20 ist hierbei relativ groß, d.h. zumindest größer als die Höhe des Dichtspaltes 14 im Bereich der Verengung 17. Dadurch wird dem Auftreten von Kapillarkräften, die eindringenden Umgebungsflüssigkeiten um den Dichtring 18 herum lenken könnten, entgegengewirkt.

In den Figuren nicht dargestellt ist eine im Außenring 3 eingebrachte Abflussnut.

### BEZUGSZEICHENLISTE

- 1: Dichtelement
- 2: Innenring
- 3: Außenring
- 4: innenliegende Mantelfläche
- 5: erste Seitenfläche
- 6: zweite Seitenfläche
- 7: außenliegende Mantelfläche
- 8: zylindrische Außenfläche
- 9: außenliegende Mantelfläche
- 10: erste Seitenfläche
- 11: zweite Seitenfläche
- 12: innenliegende Mantelfläche
- 13: zylindrische Innenfläche
- 14: Dichtspalt
- 15: Eingangsabschnitt
- 16: Mäanderabschnitt
- 17: Verengung
- 18: Dichtring
- 19: Nut
- 20: Ausgangsabschnitt
- A1: gemeinsame Achse

## Patentansprüche

1. Dichtelement (1), zur Abdichtung einer zylindrischen Innenfläche (13) eines ersten Maschinenbauteils und einer zylindrischen Außenfläche (8) eines zweiten Maschinenbauteils, mit einem Innenring (2), einem koaxial zum Innenring (2) angeordneten Außenring (3) und einem Dichtspalt (14), welcher durch eine außenliegende Mantelfläche (7) des Innenrings (2) und eine innenliegende Mantelfläche (12) des Außenrings (3) gebildet wird, wobei der Dichtspalt (14) in einem Axialschnitt durch die gemeinsame Achse (A1) des Innenrings (2) und des Außenrings (3) ein Profil mit folgenden Profilabschnitten aufweist:
- einen Eingangsabschnitt (15) als einen erster Endabschnitt des Dichtspalts (14) mit einem ersten Radius zur gemeinsamen Achse;
- einem Ausgangsabschnitt (20) als einen zweiten Endabschnitt des Dichtspalts (14) mit einem zweiten Radius zur gemeinsamen Achse (A1), wobei der zweite Radius kleiner als der erste Radius ist; und
- einen Mäanderabschnitt (16), welcher sich an den Eingangsabschnitt (15) anschließt und welcher einen sich monoton verkleinernden Radius besitzt;
wobei das Dichtelement ferner einen zwischen dem Mäanderabschnitt (16) und dem Ausgangsabschnitt (20) im Dichtspalt (14) angeordneten Dichtring (18) aufweist,
**dadurch gekennzeichnet, dass**
- das Profil des Dichtspalts (14) zwischen dem Mäanderabschnitt (16) und dem Dichtring (18) eine Verengung (17) aufweist, und
- der Dichtring (18) derart im Dichtspalt (14) positioniert ist, dass der Dichtring (18) entweder nur den Innenring (2) oder nur den Außenring (3) kontaktiert.

2. Dichtelement nach Anspruch 1, wobei die außenliegende Mantelfläche (7) des Innenrings (2) und/oder die innenliegende Mantelfläche (12) des Außenrings (3) eine Nut (19) aufweisen, in welcher der Dichtring (18) angeordnet ist.

3. Dichtelement nach einem der Ansprüche 1 oder 2, wobei das Profil des Dichtspalts (14) zwischen dem Dichtring (18) und dem Ausgangsabschnitt (20) eine Verbreiterung aufweist.

4. Dichtelement nach einem der vorhergehenden Ansprüche, wobei der Mäanderabschnitt (16) mindestens aus einem ersten Paar von parallel zueinander verlaufenden, konischen Teilflächen des Innenrings (2) und des Außenrings (3) sowie einem zweiten Paar von parallel zueinander verlaufenden, konischen Teilflächen des Innenrings (2) und des Außenrings (3) gebildet wird, und wobei das erste und das zweite Paar entgegengesetzt zueinander konisch ausgebildet sind.

5. Dichtelement nach Anspruch 4, wobei der Konuswinkel des ersten Paares und der Konuswinkel des zweiten Paares betragsmäßig ähnlich oder gleich sind.

6. Dichtelement nach einem der vorhergehenden Ansprüche, wobei in dem Außenring (3) eine Abflussnut vorgesehen ist.

## Claims

1. Sealing element (1) for sealing a cylindrical internal face (13) of a first machine component and a cylindrical external face (8) of a second machine component, having an inner ring (2), an outer ring (3) which is disposed coaxially with the inner ring (2), and a sealing gap (14) which is formed by an outer shell (7) of the inner ring (2) and an inner shell (12) of the outer ring (3), wherein the sealing gap (14) in an axial section through the common axis (A1) of the inner ring (2) and of the outer ring (3) has a profile with the following profile portions:
- an entry portion (15) as a first end portion of the sealing gap (14), having a first radius to the common axis;
- an exit portion (20) as a second end portion of the sealing gap (14), having a second radius to the common axis (A1), wherein the second radius is smaller than the first radius; and
- a meandering portion (16) which adjoins the entry portion (15) and which has a monotonously decreasing radius;
wherein the sealing element furthermore has an annular seal (18) which is disposed in the sealing gap (14) between the meandering portion (16) and the exit portion (20),
**characterized in that**
- the profile of the sealing gap (14) has a constriction (17) between the meandering portion (16) and the annular seal (18), and
- the annular seal (18) is positioned in the sealing gap (14) in such a manner that the annular seal (18) either contacts only the inner ring (2) or only the outer ring (3).

2. Sealing element according to Claim 1, wherein the outer shell (7) of the inner ring (2) and/or the inner shell (12) of the outer ring (3) have/has a groove (19) in which the annular seal (18) is disposed.

3. Sealing element according to either of Claims 1 and 2, wherein the profile of the sealing gap (14) has a widening between the annular seal (18) and the exit portion (20).

4. Sealing element according to one of the preceding claims, wherein the meandering portion (16) is formed at least by one first pair of conical part-surfaces of the inner ring (2) and of the outer ring (3) which run so as to be mutually parallel, and by a second pair of conical part-surfaces of the inner ring (2) and of the outer ring (3) which run so as to be mutually parallel, and wherein the first and the second pair are configured so as to be conically opposed to one another.

5. Sealing element according to Claim 4, wherein the cone angle of the first pair and the cone angle of the second pair in terms of value are similar or identical.

6. Sealing element according to one of the preceding claims, wherein a drain groove is provided in the outer ring (3).

## Revendications

1. Elément d'étanchéité (1) destiné à fermer hermétiquement une surface cylindrique intérieure (13) d'un premier composant de machine et une surface cylindrique extérieure (8) d'un deuxième composant de machine,
l'élément d'étanchéité présentant une bague intérieure (2), une bague extérieure (3) disposée coaxialement par rapport à la bague intérieure (2) et un interstice d'étanchéité (14) formé par une surface d'enveloppe extérieure (7) de la bague intérieure (2) et une surface d'enveloppe intérieure (12) de la bague extérieure (3),
l'interstice d'étanchéité (14) présentant dans une coupe axiale passant par l'axe commun (A1) de la bague intérieure (2) et de la bague extérieure (3) un profil présentant les sections suivantes :
une section d'entrée (15) configurée comme première section d'extrémité de l'interstice d'étanchéité (14), avec un premier rayon par rapport à l'axe commun,
une section de sortie (20) configurée comme deuxième section d'extrémité de l'interstice d'étanchéité (14), avec un deuxième rayon par rapport à l'axe commun (A1), le deuxième rayon étant plus petit que le premier rayon et
une section (16) en méandres qui se raccorde à la section d'entrée (15) et qui présente un rayon qui diminue de manière monotone,
l'élément d'étanchéité présentant en outre une bague d'étanchéité (18) disposée entre la section (16) en méandres et la section de sortie (20) dans l'interstice d'étanchéité (14),
**caractérisé en ce que**
le profil de l'interstice d'étanchéité (14) présente un rétrécissement (17) entre la section (16) en méandres et la bague d'étanchéité (18) et
la bague d'étanchéité (18) est placée dans l'interstice d'étanchéité (14) de telle sorte que la bague d'étanchéité (18) soit en contact uniquement avec la bague intérieure (2) ou uniquement avec la bague extérieure (3).

2. Elément d'étanchéité selon la revendication 1, dans lequel la surface d'enveloppe extérieure (7) de la bague intérieure (2) et/ou la surface d'enveloppe intérieure (12) de la bague extérieure (3) présentent une rainure (19) dans laquelle est disposée la bague d'étanchéité (18).

3. Elément d'étanchéité selon l'une des revendications 1 ou 2, dans lequel le profil de l'interstice d'étanchéité (14) présente un évasement entre la bague d'étanchéité (18) et la section de sortie (20).

4. Elément d'étanchéité selon l'une des revendications précédentes, dans lequel la section (16) en méandres est formée au moins d'une première paire de parties coniques de surface, s'étendant parallèlement l'une par rapport à l'autre, de la bague intérieure (2) et de la bague extérieure (3) ainsi que d'une deuxième paire de parties coniques de surface, s'étendant parallèlement l'une vers l'autre, de la bague intérieure (2) et de la bague extérieure (3), la première et la deuxième paire présentant des conicités mutuellement opposées.

5. Elément d'étanchéité selon la revendication 4, dans lequel l'angle de cône de la première paire et l'angle de cône de la deuxième paire ont des valeurs similaires ou identiques.

6. Elément d'étanchéité selon l'une des revendications précédentes, dans lequel une rainure d'écoulement de sortie est prévue dans la bague extérieure (3).
